# EUROPÄISCHE PATENTANMELDUNG

(11) **EP 2 468 555 A2**
(43) Veröffentlichungstag der Anmeldung: **27.06.2012**
(21) Anmeldenummer: 11009755.7
(22) Anmeldetag: 10.12.2011
(51) Int. Cl.: B60K 15/035

(54) **Einrichtung zur Entlüftung und Belüftung eines Kraftstofftanks**

(30) Priorität: 21.12.2010 DE 102010055316
(71) Anmelder: AUDI AG, 85045 Ingolstadt (DE)
(72) Erfinder: Hagen, Harald, 95473 Creussen (DE)
(74) Vertreter: Lehle, Josef

(57) **Zusammenfassung**

Die Erfindung betrifft eine Einrichtung zur Entlüftung und Belüftung eines Kraftstofftanks, mit einem Tankabsperrventil (2) und zwei Tankdruckregelventilen (3, 4), von denen eines im Falle eines Unterdrucks im Kraftstofftank und eines im Falle eines Überdrucks im Kraftstofftank öffnet. Damit sich die Öffnungsdrücke der beiden Tankdruckregelventile (3, 4) flexibel und unabhängig vom jeweils anderen Ventil (4, 3) anpassen lassen, wird erfindungsgemäß vorgeschlagen, dass die beiden Tankdruckregelventile (3, 4) voneinander unabhängig sind.

## Beschreibung

Die Erfindung betrifft eine Einrichtung zur Entlüftung und Belüftung eines Kraftstofftanks gemäß dem Oberbegriff des Anspruchs 1.

Einrichtungen der eingangs genannten Art werden bei Kraftfahrzeugen zwischen dem Kraftstofftank und einem Aktivkohlefilter vorgesehen, der einen unerwünschten Austritt von flüchtigen Kohlenwasserstoffen aus dem Kraftstofftank in die Umgebung des Kraftfahrzeugs verhindern soll. Bei dem Tankabsperrventil handelt es sich um ein steuerbares Ventil, wie beispielsweise ein Elektromagnetventil, das normalerweise geschlossen ist und während des Betankens des Kraftstofftanks geöffnet wird, um ein aus dem Kraftstofftank verdrängtes Gasgemisch durch den Aktivkohlefilter zu leiten und die im Gasgemisch enthaltenen Kohlenwasserstoffe (HC) zu adsorbieren, so dass nur gereinigte Luft in die Umgebung gelangt. Bei den beiden Tankdruckregelventilen handelt es sich um ein Überdruckventil und ein Unterdruckventil, die ebenfalls normalerweise geschlossen sind. Das Überdruckventil öffnet sich selbsttätig, wenn sich zum Beispiel bei einem Anstieg der Umgebungstemperaturen oder während einer Nachheizphase nach dem Abstellen der Brennkraftmaschine aufgrund einer Verdunstung von Kraftstoff im Inneren des Kraftstofftanks ein vorbestimmter Überdruck einstellt, während sich das Unterdruckventil selbsttätig öffnet, wenn zum Beispiel bei sinkenden Umgebungstemperaturen Kraftstoff im Inneren des Kraftstofftanks kondensiert und sich infolgedessen im Kraftstofftank ein vorbestimmter Unterdruck einstellt.

Bekannte Einrichtungen dieser Art sind gewöhnlich als Kombinationsventil ausgebildet, in dem das Tankabsperrventil und die beiden als Bypassventile ausgebildeten Tankdruckregelventile zusammengefasst sind, wobei die Tankdruckregelventile in der Praxis gewöhnlich eine einzige Membran besitzen, die sowohl bei einem Überdruck und bei einem Unterdruck im Kraftstofftank entgegen der Kraft einer Feder ausgelenkt wird, um das Ventil zu öffnen. Der Öffnungsdruck des Ventils wird durch den Flächeninhalt der Membran und die Federkennlinie der auf die Membran einwirkenden Feder bestimmt und lässt sich daher bei Verwendung einer einzigen Membran nur durch Veränderung der Federkennlinie beeinflussen. Zum Beispiel kann eine härtere Feder verwendet werden, wenn der Öffnungsdruck des Ventils bei einem Überdruck im Kraftstofftank, d.h. die positive Druckdifferenz zwischen dem Inneren des Kraftstofftank und dem Inneren des Aktivkohlefilters, bei der sich das Ventil öffnet, auf einen größeren Wert eingestellt werden soll. Dies hat jedoch zur Folge, dass sich das Ventil im Falle eines Unterdrucks im Kraftstofftank auch erst bei einer größeren negativen Druckdifferenz zwischen dem Inneren des Kraftstofftank und dem Inneren des Aktivkohlefilters öffnet, d.h. wenn im Inneren des Kraftstofftanks ein stärkerer Unterdruck herrscht. Damit lassen sich die Öffnungsdrücke für die beiden Fälle eines Überdrucks bzw. eines Unterdrucks im Kraftstofftank nicht ausreichend flexibel anpassen.

Ausgehend hiervon liegt der Erfindung die Aufgabe zugrunde, eine Einrichtung der eingangs genannten Art dahingehend zu verbessern, dass sich die Öffnungsdrücke der beiden Tankdruckregelventile flexibel und unabhängig vom jeweils anderen Ventil anpassen lassen.

Diese Aufgabe wird erfindungsgemäß dadurch gelöst, dass die beiden Tankdruckregelventile voneinander unabhängig sind, so dass sich die Öffnungsdrücke der beiden Tankdruckregelventile zum Beispiel durch Veränderung der Federkennlinie und/oder der Größe der Membran jedes Tankdruckregelventils flexibel und unabhängig vom jeweils anderen Ventil anpassen lassen.

Eine bevorzugte Ausgestaltung der Erfindung sieht vor, dass die beiden Tankdruckregelventile und das Tankabsperrventil modulartig aufgebaut sind, so dass sie nach Bedarf zu Ventileinheiten oder Ventilbaugruppen zusammengefasst werden können. Vorzugsweise werden die beiden Tankdruckregelventile entweder gemäß einer ersten Erfindungsalternative mit dem Tankabsperrventil zu einer Ventileinheit oder Ventilbaugruppe zusammengefasst, oder sie werden gemäß einer zweiten Erfindungsalternative miteinander zu einer Ventileinheit oder Ventilbaugruppe zusammengefasst.

Die zuerst genannte Erfindungsalternative hat den Vorteil, dass die Ventileinheit aus den beiden Tankdruckregelventilen und dem Tankabsperrventil mit einem einzigen, mit dem Kraftstofftank verbindbaren Tankanschluss und einem einzigen, mit einem Aktivkohlefilter verbindbaren Filteranschluss auskommt. Diese Anschlüsse sind vorteilhaft am Tankabsperrventil angeordnet, wobei sie jeweils durch Innenräume des Tankabsperrventils hindurch mit einer von zwei durch eine Membran getrennten Kammern im Inneren von jedem der beiden Tankdruckregelventile kommunizieren, so dass der im Inneren des Kraftstofftanks bzw. des Aktivkohlefilters herrschende Druck auch im Inneren von jeweils einer der Kammern des Unterdruckventils und des Überdruckventils anliegt.

Um den Bauraum der Ventileinheit aus den beiden Tankdruckregelventilen und dem Tankabsperrventil zu minimieren, sieht eine bevorzugte Ausgestaltung der Erfindung vor, dass das Tankabsperrentil zwei in Bezug zueinander drehbare und vorzugsweise in beliebigen Drehausrichtungen in Bezug zueinander fixierbare Teile umfasst, deren Drehachse vorzugsweise mit der Längsmittelachse des Tankabsperrventils zusammenfällt, wobei eines der beiden Teile mit Befestigungsmitteln zur Befestigung des Tankabsperrventils und das andere der beiden Teile mit den beiden Tankdruckregelventilen und den beiden Anschlüssen versehen ist, d.h. dem Tankanschluss und dem Filteranschluss. Auf dieser Weise kann das Teil mit den beiden Tankdruckregelventilen und den beiden Anschlüssen ungeachtet der Ausrichtung der zur Montage der Ventileinheit dienenden Halterung je nach Platzangebot in eine günstige Lage gedreht werden. Die beiden Tankdruckregelventile sind vorzugsweise an entgegengesetzten Seiten des Tankabsperrventils angebracht, was aus Bauraumgründen Vorteile hat und auch die Verbinden der beiden Kammern jedes Ventils mit getrennten Innenräumen des Tankabsperrventils erleichtert.

Die zuletzt genannte Erfindungsalternative hat den Vorteil, dass die beiden Tankdruckregelventile getrennt vom Tankabsperrventil montiert werden können, zum Beispiel die beiden Tankdruckregelventile innerhalb des Kraftstofftanks und das Tankabsperrventil außerhalb des Kraftstofftanks.

Der grundsätzliche Aufbau der Tankdruckregelventile ist bei beiden Erfindungsaltemativen derselbe: Jedes Tankdruckregelventil umschließt zwei durch eine Membran getrennte Kammern, von denen eine mit dem Tankanschluss und eine mit dem Filteranschluss kommuniziert. Die Membran weist eine Öffnung auf und wird von einer Feder um die Öffnung herum gegen das freie Ende eines Rohrstutzens angepresst, der eine der Kammern durchsetzt und durch die Öffnung in die andere Kammer mündet, in der sich die Feder befindet. Die Verbindung zwischen den beiden Kammern und dem Tankanschluss bzw. dem Filteranschluss ist beim Überdruckventil und beim Unterdruckventil umgekehrt: Beim Überdruckventil kommuniziert die den Rohrstutzen umgebende Kammer mit dem Kraftstofftank und die mit der Feder bestückte Kammer mit dem Aktivkohlefilter. Wenn sich im Kraftstofftank ein Überdruck einstellt, der den Öffnungsdruck des Überdruckventils übersteigt, wird die Membran vom Überdruck entgegen der Kraft der Feder vom Rohrstutzen abgehoben, so dass die beiden Kammern miteinander kommunizieren. Beim Unterdruckventil kommuniziert die mit der Feder bestückte Kammer mit dem Kraftstofftank und die den Rohrstutzen umgebende Kammer mit dem Aktivkohlefilter. Wenn sich im Kraftstofftank ein Unterdruck einstellt, der den Öffnungsdruck des Unterdruckventils übersteigt, wird die Membran vom Unterdruck entgegen der Kraft der Feder vom Rohrstutzen abgehoben, so dass die beiden Kammern ebenfalls miteinander kommunizieren.

Das Tankabsperrventil weist zwei Anschlüsse auf, nämlich einen mit dem Kraftstofftank verbindbaren Tankanschluss und einen mit einem Aktivkohlefilter verbindbaren Filteranschluss, und ist vorteilhaft so ausgebildet, dass sich die beiden Anschlüsse nach unten zu öffnen, wenn das Tankabsperrventil stehend, d.h. mit vertikaler Längsmittelachse, verbaut wird, während sie sich zu einer Seite hin öffnen und unterhalb von einer Längsmittelebene des Tankabsperrventils angeordnet sind, wenn das Tankabsperrventil liegend, mit horizontaler Längsmittelachse, verbaut wird. Die Anschlüsse stehen zweckmäßig über die Ventileinheit über, so dass an jedem Anschluss ein Schlauch oder Rohr befestigt werden kann.

Wenn das Tankabsperrventil gemäß der oben beschriebenen bevorzugten Ausgestaltung der Erfindung zwei in Bezug zueinander drehbare und vorzugsweise in beliebigen Drehausrichtungen fixierbare Teile umfasst, von denen eines mit Befestigungsmitteln zur Befestigung des Tankabsperrventils und das andere mit den beiden Tankdruckregelventilen und dem Tankanschluss sowie dem Filteranschluss versehen ist, kann das Teil mit den beiden Tankdruckregelventilen und den beiden Anschlüssen ungeachtet der Ausrichtung der Halterung immer so gedreht werden, dass ein guter Kondensatablauf ermöglicht wird, wobei bei liegendem Einbau des Tankabsperrventils vorteilhaft beide Anschlüsse unterhalb von dessen Längsmittelebene und vorzugsweise tiefstmöglich angeordnet sind.

Die beiden Anschlüsse münden jeweils in einen Innenraum des Tankabsperrventils, wobei die Einmündung jedes Anschlusses in den zugehörigen Innenraum zweckmäßig sowohl bei stehender als auch bei liegender Einbaulage des Tankabsperrventils an der tiefsten Stelle des jeweiligen Innenraums angeordnet ist und vorzugsweise mindestens zum Teil von schrägen, zur Einmündung hin nach unten geneigten Flächen begrenzt wird. Dadurch wird der Ablauf von eventuell gebildetem Kondensat aus dem Tankabsperrventil und auch aus den beiden Tankdruckregelventilen erleichtert, sofern diese mit dem Tankabsperrventil zu einer Ventileinheit zusammengefasst sind.

Im Folgenden wird die Erfindung anhand von einigen in der Zeichnung dargestellten Ausführungsbeispielen näher erläutert. Es zeigen
Fig. 1 eine Seitenansicht einer Ventileinheit mit einem Tankabsperrventil und zwei Tankdruckregelventilen;
Fig. 2 eine Unterseitenansicht der Ventileinheit aus Fig. 1;
Fig. 3 eine Schnittansicht des Tankabsperrventils entlang der Linie III-III der Fig. 2 zur Erläuterung des Kondensatablaufs bei stehendem Einbau;
Fig. 4 eine Schnittansicht des Tankabsperrventils entlang der Linie IV-IV der Fig. 2 zur Erläuterung des Kondensatablaufs bei stehendem Einbau;
Fig. 5 eine schematische Schnittansicht des Tankabsperrventils zur Erläuterung des Kondensatablaufs bei liegendem Einbau;
Fig. 6a und 6b unterschiedliche Schnittansichten der beiden Tankdruckregelventile;
Fig. 7 eine perspektivische Ansicht eines anderen Tankabsperrventils;
Fig. 8 eine perspektivische Ansicht einer Ventileinheit aus zwei Tankdruckregelventilen;
Fig. 9 eine Seitenansicht der Ventileinheit aus Fig. 8;
Fig. 10 eine Längsschnittansicht der Ventileinheit aus Fig. 8 und 9;
Fig. 11 eine perspektivische Ansicht einer anderen Ventileinheit aus zwei Tankdruckregelventilen;
Fig. 12 eine Seitenansicht der Ventileinheit aus Fig. 11;
Fig. 13 eine Querschnittsansicht der Ventileinheit aus Fig. 11 und 12.

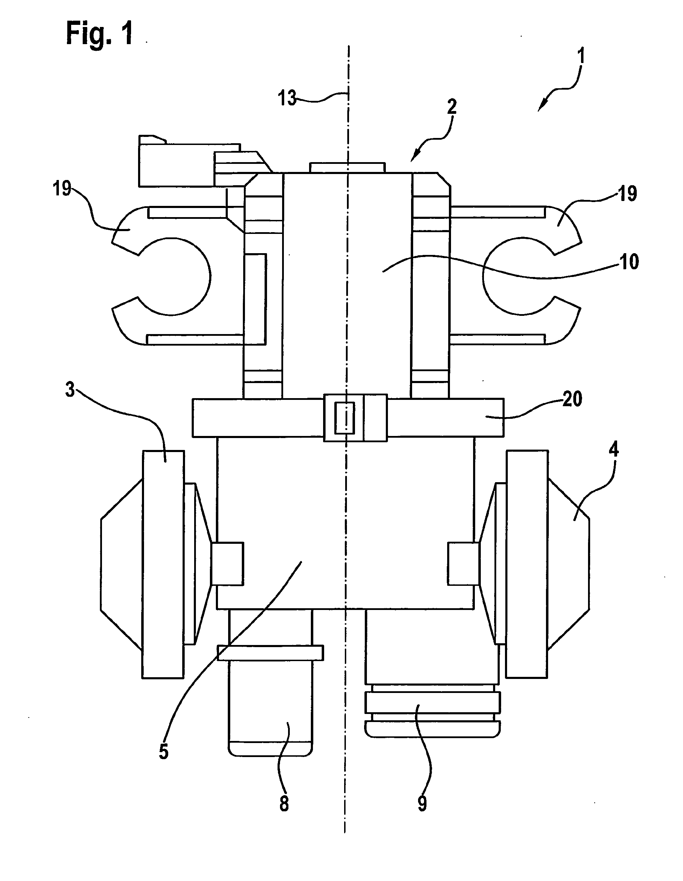

Die in den Figuren 1 bis 4 dargestellte Ventileinheit 1 dient zur Entlüftung und Belüftung eines Kraftstofftanks (nicht dargestellt) und ist zum Einbau zwischen dem Kraftstofftank und einem Aktivkohlefilter (nicht dargestellt) bestimmt, der bei einer Entlüftung oder Belüftung des Kraftstofftanks einen Austritt von flüchtigen Kohlenwasserstoffen in die Atmosphäre oder Umgebung verhindert.

Die Ventileinheit 1 besteht im Wesentlichen aus einem Tankabsperrventil 2 und zwei voneinander getrennten Tankdruckregelventilen 3, 4, die an entgegengesetzten Seiten des Tankabsperrventils 2 angeordnet sind.

Das Tankabsperrventil 2 ist ein Elektromagnetventil, das aus zwei drehbar miteinander verbundenen Teilen besteht, nämlich einem Ventilteil 5 mit einem Ventilsitz 6, einem in Bezug zum Ventilsitz 6 beweglichen Ventilglied 7 und zwei Anschlüssen 8, 9, d.h. einem mit dem Kraftstofftank verbindbaren Tankanschluss 8 und einem mit einem Aktivkohlefilter verbindbaren Filteranschluss 9, sowie einem Ventilbetätigungsteil 10 mit einer Elektromagnetspule 11 und einem auf das Ventilglied 7 einwirkenden Anker 12. Wenn die Elektromagnetspule 11 erregt wird, hebt der Anker 12 das Ventilglied 7 vom Ventilsitz 6 ab, woraufhin die beiden Anschlüsse 8, 9 miteinander kommunizieren.

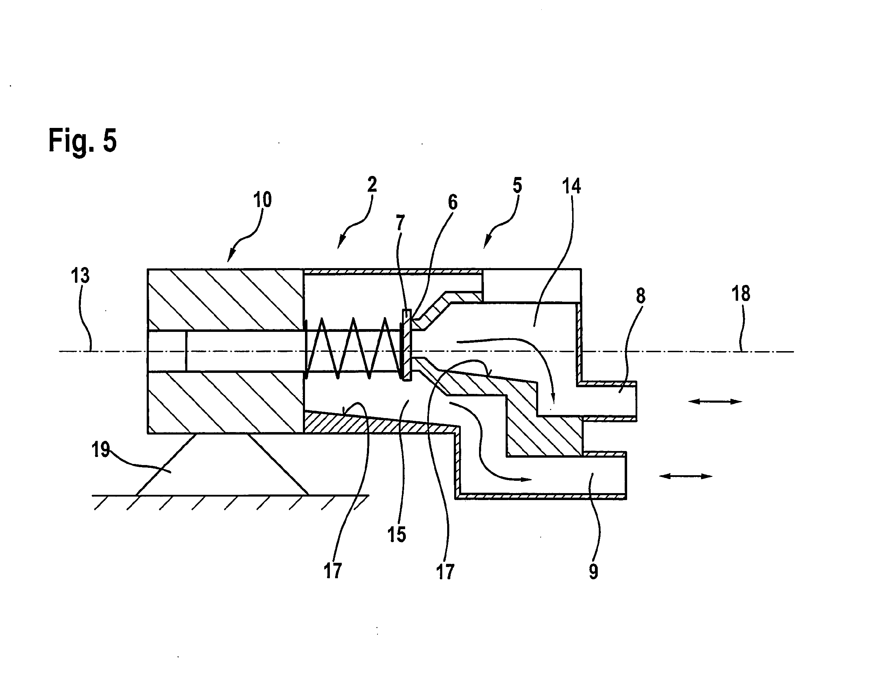

Wie am besten in den Figuren 1, 3, 4 und 5 dargestellt, kann die Ventileinheit 1 in verschiedenen Einbaulagen montiert werden, nämlich stehend, wie in Fig. 1, 3 und 4 dargestellt, d.h. mit vertikaler Längsmittelachse 13, oder liegend, wie in Fig. 5 schematisch ohne die beiden Tankdruckregelventile 3, 4 dargestellt, d.h. mit horizontaler Längsmittelachse 13. Selbstverständlich kann die Ventileinheit 1 auch in einer beliebigen schrägen Einbaulage zwischen stehend und liegend montiert werden.

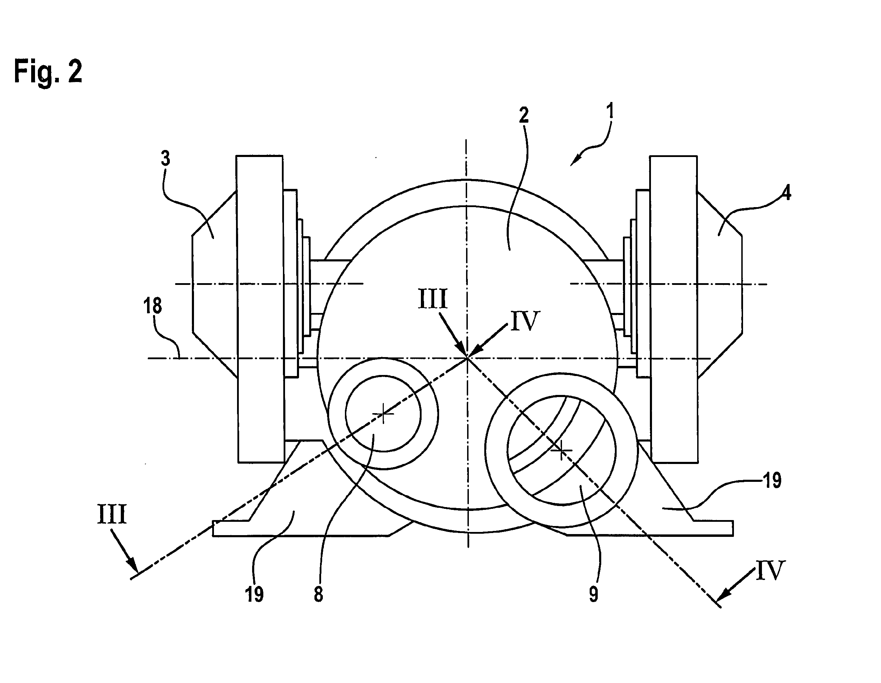

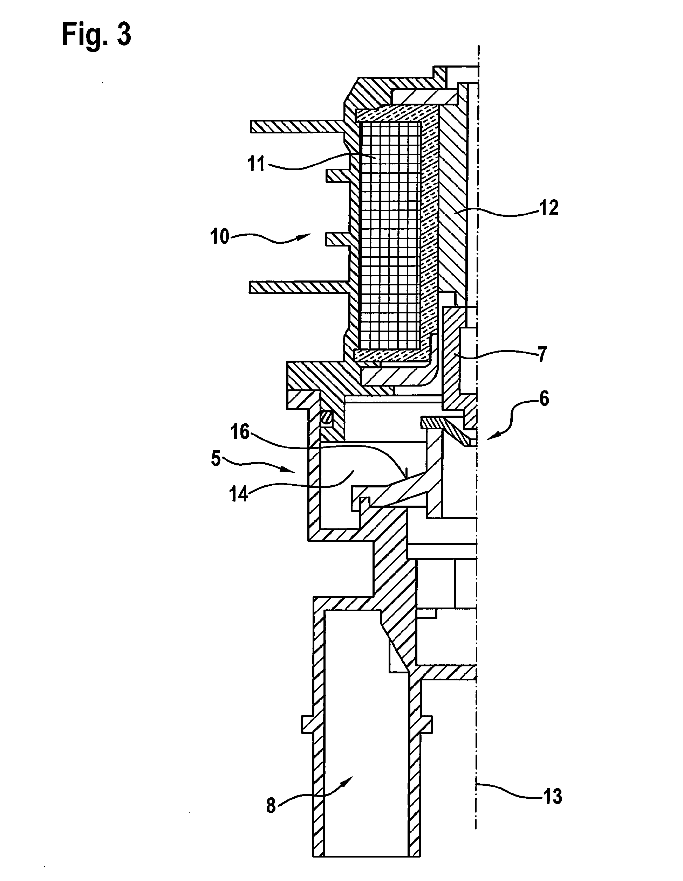

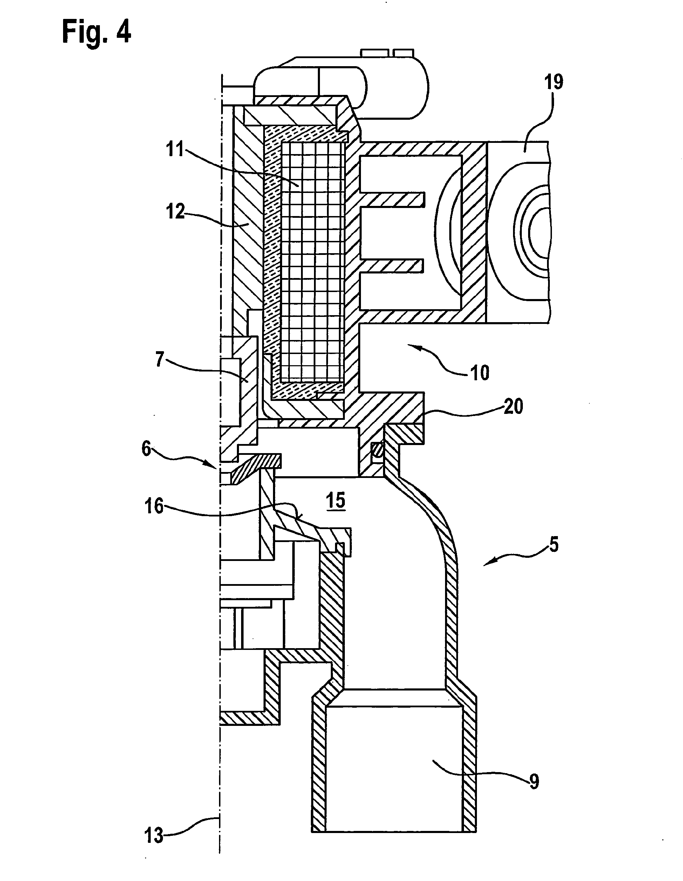

Um zu verhindern, dass sich in einer dieser Einbaulagen im Inneren des Tankabsperrventils 2 flüssiges Kondensat ansammeln kann, ist das Tankabsperrventil 2 so konstruiert, dass bei stehendem Einbau der Tankanschluss 8 und der Filteranschluss 9 an der Unterseite des Ventilteils 5 angeordnet sind, nach unten über den Ventilteil 5 überstehen und sich beide nach unten zu öffnen, wie in Fig. 1, 3 und 4 dargestellt. Darüber hinaus ist jeder der beiden Anschlüsse 8, 9 derart mit einem mit dem Tankanschluss 8 bzw. mit dem Filteranschluss 9 kommunizierenden Innenräumen 14 bzw. 15 des Tankabsperrventils 2 verbunden, dass in den Innenräumen 14, 15 kondensierender Kraftstoffdampf vollständig in den Anschluss 8, 9 fließt, der sowohl bei stehendem und bei liegendem Einbau des Ventils 1 von unten her in den Innenraum 14 bzw. 15 mündet, wie am besten in Fig. 3 und 4 bzw. 5 dargestellt. Um den Ablauf von Kondensat aus den Innenräumen 14, 15 in die Anschlüsse 8 bzw. 9 zu erleichtern, werden beide Innenräume 14, 15 bei stehendem Einbau (Fig. 3 und 4) nach unten zu von schrägen Flächen 16 und bei liegendem Einbau nach unten zu von schrägen Flächen 17 begrenzt, die zu den Einmündungen der Anschlüsse 8, 9 hin nach unten geneigt sind. Bei geschlossenem Ventil 2 sind die Innenräume 14, 15 durch das Ventilglied 7 voneinander getrennt. Weiter ist das Tankabsperrventil 2 so konstruiert, dass beide Anschlüsse 8, 9 auf einer Seite einer Längsmittelebene 18 (Fig. 2) des Tankabsperrventils 2 angeordnet sind, welche bei stehendem Einbau vertikal ausgerichtet ist, und dass der Ventilteil 5 in Bezug zu dem mit Befestigungsmitteln 19 versehenen Ventilbetätigungsteil 10 um die Längsmittelachse 13 des Tankabsperrventils 2 drehbar und in einer beliebigen Drehlage fixierbar ist, wie am besten in Fig. 1, 3 und 4 durch einen Spannring 20 dargestellt, so dass der Ventilteil 5 bei liegendem Einbau ungeachtet der Ausrichtung der Befestigungsmittel 19 immer in eine Stellung gedreht werden kann, in der die beiden Anschlüsse 8, 9 unterhalb von der Längsmittelebene 18 angeordnet sind und sich nach einer Seite zu öffnen, wie in Fig. 5 dargestellt. Darüber hinaus ist der Tankanschluss 8 derart mit dem Innenraum 14 und der Filteranschluss 9 derart mit dem Innenraum 15 verbunden, dass in den Innenräumen 14, 15 kondensierender Kraftstoffdampf vollständig in den von unten her in den Innenraum 14, 15 mündenden Anschluss 8 bzw. 9 fließt, wie in Fig. 5 dargestellt. Damit können in jeder Einbaulage zwischen stehend und liegend Totkraftstoffbereiche vermieden werden.

Die beiden als Ventileinheit mit dem Tankabsperrventil 2 ausgebildeten Tankdruckregelventile 3, 4 sind Bypassventile, von denen eines ein Unterdruckventil 3 und das andere ein Überdruckventil 4 ist. Das Unterdruckventil 3 öffnet sich ebenfalls selbsttätig, wenn sich im Kraftstofftank ein definierter Unterdruck einstellt. Das Überdruckventil 4 öffnet sich selbsttätig, wenn sich im Kraftstofftank ein definierter Überdruck einstellt.

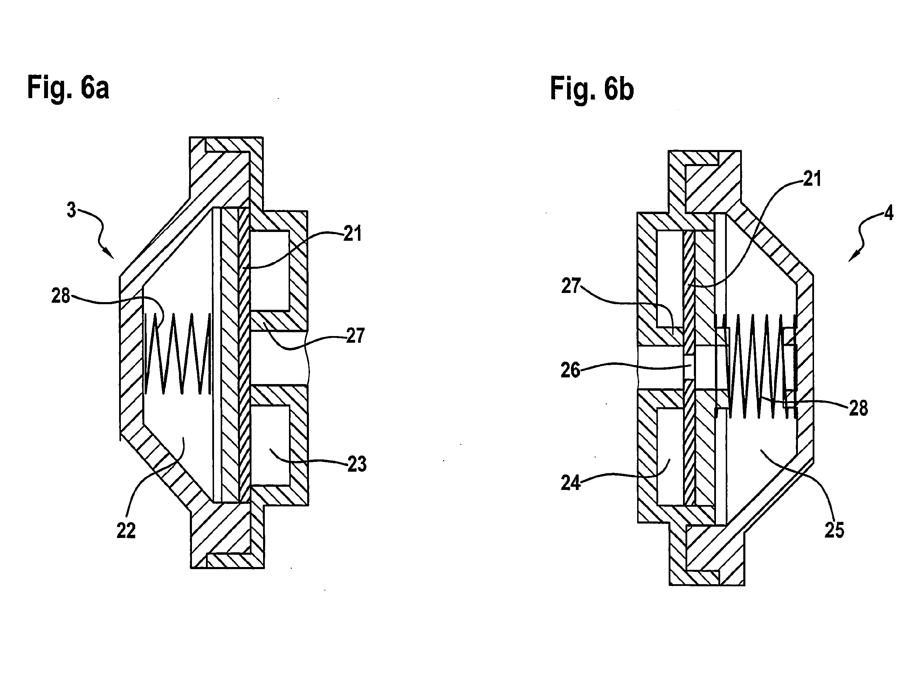

Wie am besten in Fig. 6a und 6b dargestellt, weisen die beiden Tankdruckregelventile 3, 4 jeweils zwei durch eine Membran 21 getrennte Kammern 22, 23; 24, 25 auf, von denen nach der Montage der Ventileinheit 1 jeweils eine 22; 24 mit dem Kraftstofftank und eine 23; 25 mit dem Aktivkohlefilter kommuniziert. Bei dem Unterdruckventil 3 in Fig. 6a ist die mit dem Kraftstofftank kommunizierende Unterdruckkammer 22 vom Tankabsperrventil 2 abgewandt, während die andere, mit dem Aktivkohlefilter kommunizierende Kammer 23 dem Tankabsperrventil 2 zugewandt ist. Bei dem Überdruckventil 4 in Fig. 6b ist hingegen die mit dem Kraftstofftank kommunizierende Überdruckkammer 24 dem Tankabsperrventil 2 zugewandt, während die andere, mit dem Aktivkohlefilter kommunizierende Kammer 25 vom Tankabsperrventil 2 abgewandt ist. Wie am besten in Fig. 6b dargestellt, ist die Membran 21 jedes Ventils 3, 4 mit einer Öffnung 26 versehen und liegt bei geschlossenem Ventil 3, 4 um die Öffnung 26 herum auf einem zylindrischen Rohrstutzen 27 auf, durch den bei dem Unterdruckventil 3 in Fig. 6a die Unterdruckkammer 22 mit dem Kraftstofftank und bei dem Überdruckventil 4 in Fig. 6b die andere Kammer 25 mit dem Aktivkohlefilter kommuniziert. Die Membran 21 wird von einer Feder 28 gegen das freie obere Ende des Rohrstutzens 27 angepresst und sorgt dafür, dass die beiden Kammern 22, 23; 24, 25 bei geschlossenem Ventil 3, 4, d.h. normalerweise, nicht miteinander kommunizieren. Im Fall eines stärkeren Unterdrucks im Kraftstofftank wird die Membran 21 des Unterdruckventils 3 infolge des Unterdrucks in der durch den Rohrstutzen 27 mit dem Kraftstofftank kommunizierenden Unterdruckkammer 22 entgegen der Kraft der Feder 28 vom Rohrstutzen 27 abgehoben, wodurch die beiden Kammern 22, 23 unter Öffnen des Ventils 3 miteinander verbunden werden. Im Falle eines stärkeren Überdrucks im Kraftstofftank wird die Membran 21 des Überdruckventils 4 durch den Druck in der Überdruckkammer 24 entgegen der Kraft der Feder 28 vom Rohrstutzen 27 abgehoben, wodurch die beiden Kammern 24, 25 ebenfalls unter Öffnen des Ventils 4 miteinander verbunden werden.

Da das Unterdruckventil 3 und das Überdruckventil 4 getrennte Membranen 21 aufweisen, kann der Öffnungsdruck für beide Ventile 3, 4 einerseits durch die Wahl einer geeigneten Membran 21 und andererseits durch die Wahl einer geeigneten Federkennlinie der Feder 28 flexibel, d.h. unabhängig und unbeeinflusst voneinander eingestellt werden.

Die Überdruckkammer 24 des Überdruckventils 4 und die Unterdruckkammer 22 des Unterdruckventils 3 kommunizieren durch den Innenraum 14 des Tankabsperrventils 2 hindurch mit dem Tankanschluss 8, während die andere Kammer 25 des Überdruckventils 4 und die andere Kammer 22 des Unterdruckventils 3 durch den Innenraum 15 des Tankabsperrventils 2 hindurch mit dem Filteranschluss 9 kommunizieren.

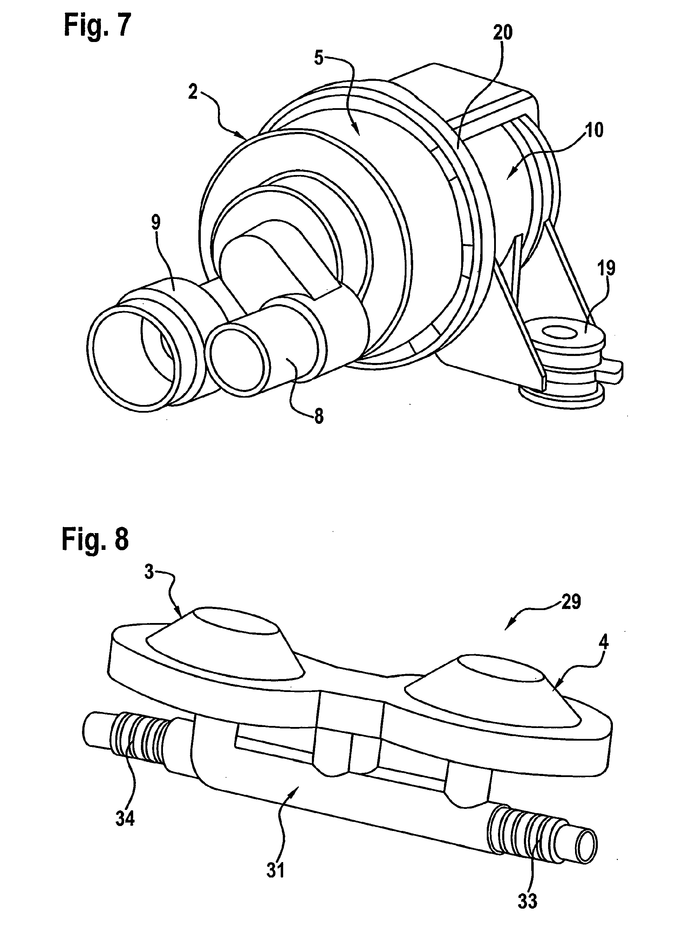

Das in Fig. 7 dargestellte Tankabsperrventil 2 weist dieselbe Konstruktion wie das Tankabsperrventil 2 in den Figuren 1, 2, 3 und 5 auf, außer dass die beiden Tankdruckregelventile 3, 4, d.h. das Unterdruckventil 3 und das Überdruckventil 4 nicht mit dem Tankabsperrventil 2 zu einer Ventileinheit 1 zusammengefasst sind. Statt dessen bilden die beiden Tankdruckregelventile 3, 4 vom Tankabsperrventil 2 getrennte Ventileinheiten 29, 30, wie in den Figuren 8 bis 13 dargestellt, so dass es zum Beispiel möglich ist, die beiden Tankdruckregelventile 3, 4 innerhalb des Kraftstofftanks und das Tankabsperrventil 2 außerhalb des Kraftstofftanks zu montieren.

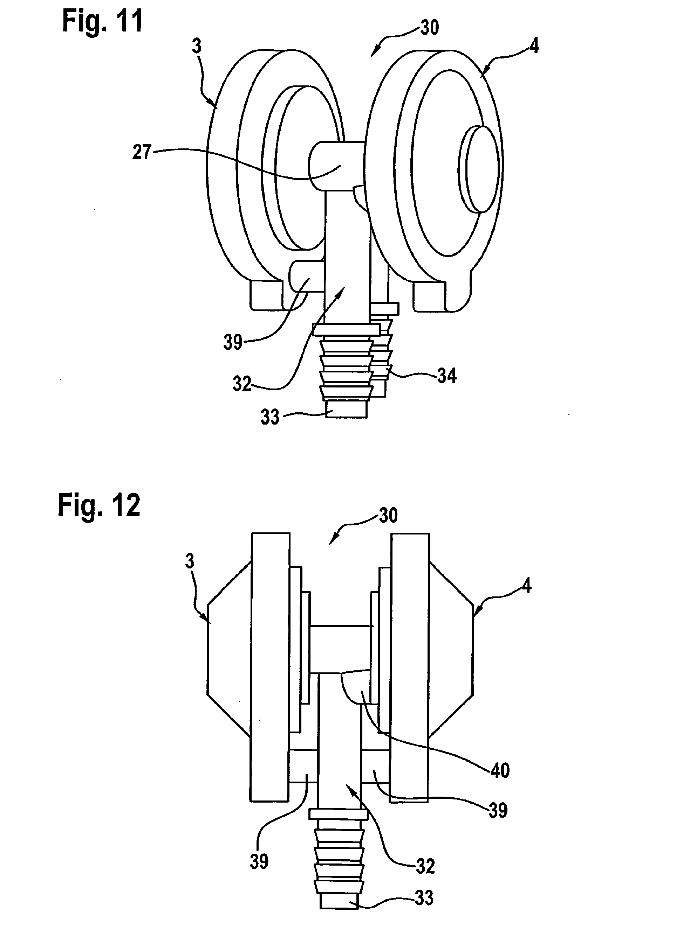

Bei der in den Figuren 8 bis 10 dargestellten Ventileinheit 29 weisen die beiden Tankdruckregelventile, d.h. das Unterdruckventil 3 und das Überdruckventil 4, dieselbe Ausrichtung auf und sind nebeneinander entlang eines Anschlussteils 31 angeordnet, während bei der Ventileinheit 30 in den Figuren 11 bis 13 die beiden Tankdruckregelventile 3, 4 entgegengesetzte Ausrichtungen aufweisen und an einem Ende eines Anschlussteils 32 angeordnet sind.

Bei beiden Ventileinheiten 29, 30 sind die mit dem Kraftstofftank kommunizierende Unterdruckkammer 22 des Unterdruckventils 3 und die ebenfalls mit dem Kraftstofftank kommunizierende Überdruckkammer 24 des Überdruckventils 4 mit einem gemeinsamen Tankanschluss 33 der Ventileinheit 29, 30 verbunden, während die mit dem Aktivkohlefilter kommunizierende andere Kammer 23 des Unterdruckventils 3 und die ebenfalls mit dem Aktivkohlefilter kommunizierende andere Kammer 25 des Überdruckventils 4 mit einem gemeinsamen Filteranschluss 34 der Ventileinheit 29, 30 verbunden sind.

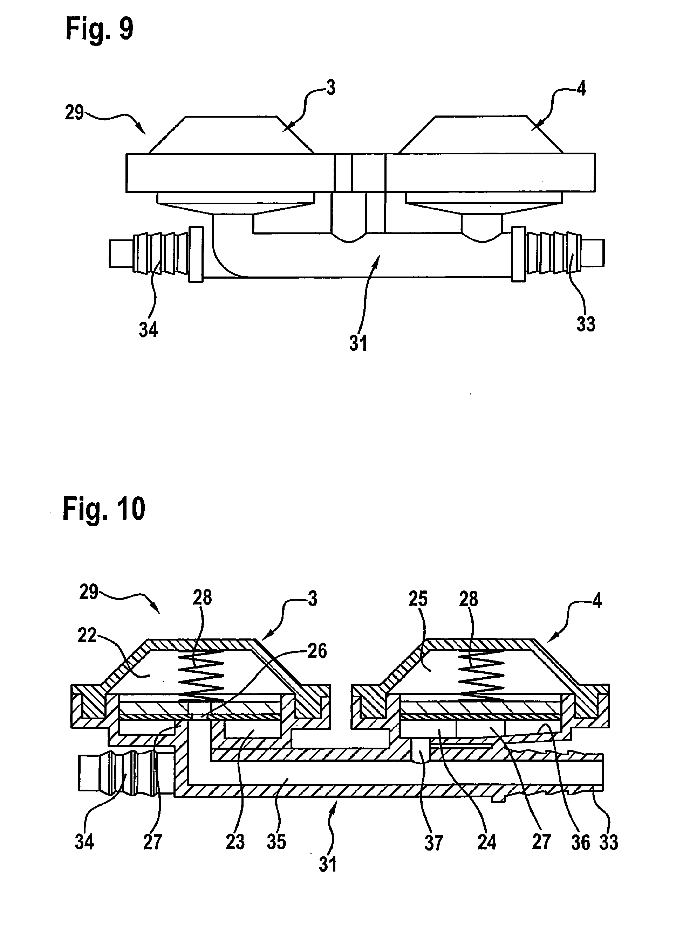

Wie am besten in Fig. 10 dargestellt, mündet bei der Ventileinheit 29 in den Figuren 8 bis 10 der Rohrstutzen 27 des Unterdruckventils 3 von unten her in die Unterdruckkammer 22, während sein unteres Ende durch eine nach der Montage der Ventileinheit 29 horizontal ausgerichtete Röhre 35 im Anschlussteil 31 mit dem Tankanschluss 33 kommuniziert, so dass kondensierender Kraftstoff aus der Unterdruckkammer 22 durch den Rohrstutzen 21 zum Tankanschluss 33 abfließen kann. Die Überdruckkammer 24 des Überdruckventils 4 wird an ihrer Unterseite von einem schrägen Boden 36 begrenzt und kommuniziert an ihrer tiefsten Stelle durch einen Durchlass 37 mit der zum Tankanschluss 33 führenden Röhre 35, so dass das Kondensat aus der Überdruckkammer 24 ebenfalls vollständig zum Tankanschluss 33 abfließen kann.

Umgekehrt mündet bei der Ventileinheit 29 der Rohrstutzen 27 des Überdruckventils 4 von unten her in die andere Kammer 25, während sein unteres Ende durch eine nach der Montage der Ventileinheit 29 parallel zu der Röhre 35 ausgerichtete Röhre (nicht sichtbar) im Anschlussteil 31 mit einem Filteranschluss 34 kommuniziert, so dass kondensierender Kraftstoff aus der Kammer 25 durch den Rohrstutzen 21 zum Filteranschluss 34 abfließen kann. Die andere Kammer 23 des Unterdruckventils 3 wird an ihrer Unterseite ebenfalls von einem schrägen Boden (nicht sichtbar) begrenzt und kommuniziert an ihrer tiefsten Stelle durch einen Durchlass (nicht sichtbar) mit der zum Filteranschluss 34 führenden Röhre, so dass das Kondensat aus der Kammer 23 ebenfalls vollständig zum Filteranschluss 34 abfließen kann.

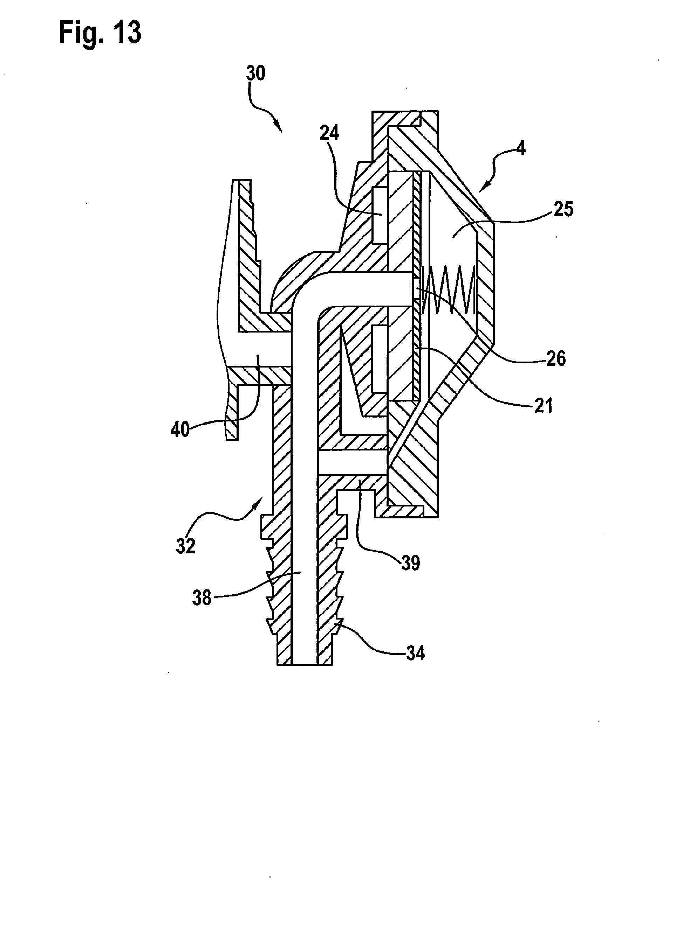

Wie am besten in Fig. 13 dargestellt, kommuniziert bei der Ventileinheit 30 in den Figuren 11 bis 13 die Kammer 25 des Überdruckventils 4 nicht nur durch den Rohrstutzen 27 sondern zusätzlich durch einen weiteren Durchlass 39 an der tiefsten Stelle der Kammer 25 mit einer zum Filteranschluss 34 führenden vertikalen Röhre 38 im Anschlussteil 32, so dass Kondensat aus der Kammer 25 durch den Durchlass 39 und die Röhre 38 zum Filteranschluss 34 abfließen kann. Die Überdruckkammer 24 des Überdruckventils 4 ist ähnlich wie die Überdruckkammer 24 beim Überdruckventil 4 der Ventileinheit 29 durch einen einzigen, an der tiefsten Stelle der Kammer 24 angeordneten Durchlass 40 mit der vertikalen Röhre 38 im Anschlussteil 32 verbunden, wie in Fig. 12 dargestellt.

Das Unterdruckventil 3 (in Fig. 13 nur teilweise dargestellt) weist einen entsprechenden Aufbau auf, wobei jedoch die andere Kammer 23 durch einen Durchlass 40 an ihrer tiefsten Stelle mit der zum Filteranschluss 34 führenden vertikalen Röhre 38 kommuniziert, während die Unterdruckkammer (nicht sichtbar) durch den Rohrstutzen 27 und einen weiteren Durchlass 39 an der tiefsten Stelle der Unterdruckkammer mit einer zur Röhre 38 parallelen, zum Tankanschluss 33 führenden Röhre im Anschlussteil 32 kommuniziert, wie am besten in Fig. 11 und 12 dargestellt.

### BEZUGSZEICHENLISTE

- 1: Ventileinheit
- 2: Tankabsperrventil
- 3: Unterdruckventil
- 4: Überdruckventil
- 5: Ventilteil Tankabsperrventil
- 6: Ventilsitz
- 7: Ventilglied
- 8: Tankanschluss Tankabsperrventil
- 9: Filteranschluss Tankabsperrventil
- 10: Ventilbetätigungsteil Tankabsperrventil
- 11: Elektromagnetspule
- 12: Anker
- 13: Längsmittelachse
- 14: Innenraum
- 15: Innenraum
- 16: Schrägfläche
- 17: Schrägfläche
- 18: Längsmittelebene
- 19: Befestigungsmittel
- 20: Spannring
- 21: Membran
- 22: Unterdruckkammer
- 23: andere Kammer
- 24: Überdruckkammer
- 25: andere Kammer
- 26: Öffnung
- 27: Rohrstutzen
- 28: Feder
- 29: Ventileinheit
- 30: Ventileinheit
- 31: Anschlussteil
- 32: Anschlussteil
- 33: Tankanschluss
- 34: Filteranschluss
- 35: Röhre
- 36: schräger Boden
- 37: Durchlass
- 38: Röhre
- 39: weiterer Durchlass
- 40: Durchlass

## Patentansprüche

1. Einrichtung zur Entlüftung und Belüftung eines Kraftstofftanks, mit einem Tankabsperrventil und zwei Tankdruckregelventilen, von denen eines im Falle eines Unterdrucks im Kraftstofftank und eines im Falle eines Überdrucks im Kraftstofftank öffnet, **dadurch gekennzeichnet, dass** die beiden Tankdruckregelventile (3, 4) voneinander unabhängig sind.

2. Einrichtung nach Anspruch 1, **dadurch gekennzeichnet, dass** die beiden Tankdruckregelventile (3, 4) und das Tankabsperrventil (2) zu einer Ventileinheit (1) zusammengefasst sind.

3. Einrichtung nach Anspruch 1 oder 2, **dadurch gekennzeichnet, dass** die beiden Tankdruckregelventile (3, 4) getrennt voneinander am Tankabsperrventil (2) montiert sind.

4. Einrichtung nach Anspruch 3, **dadurch gekennzeichnet, dass** die beiden Tankdruckregelventile (3, 4) an entgegengesetzten Seiten des Tankabsperrventils (2) montiert sind.

5. Einrichtung nach einem der Ansprüche 2 bis 4, **dadurch gekennzeichnet, dass** jedes der beiden Tankdruckregelventile (3, 4) zwei durch eine Membran (21) getrennte Kammern (22, 23; 24, 25) aufweist, dass zwei (22; 24) der vier Kammern (22, 23; 24, 25) durch einen Innenraum (14) des Tankabsperrventils (2) mit einem zum Kraftstofftank führenden Tankanschluss (8) kommunizieren, und dass die beiden anderen (23, 25) der vier Kammern (22, 23; 24, 25) durch einen Innenraum (15) des Tankabsperrventils (2) mit einem zu einem Aktivkohlefilter führenden Filteranschluss (9) kommunizieren.

6. Einrichtung nach Anspruch 1, **dadurch gekennzeichnet, dass** die beiden Tankdruckregelventile (3, 4) ohne das Tankabsperrventil (2) zu einer Ventileinheit (29, 30) zusammengesetzt sind.

7. Einrichtung nach Anspruch 6, **dadurch gekennzeichnet, dass** die beiden Tankdruckregelventile (3, 4) innerhalb des Kraftstofftanks angeordnet sind, und dass das Tankabsperrventil (2) außerhalb des Kraftstofftanks angeordnet ist.

8. Einrichtung nach Anspruch 6 oder 7, **dadurch gekennzeichnet, dass** die Ventileinheit (29, 30) einen einzigen mit dem Kraftstofftank kommunizierenden Tankanschluss (33) und einen einzigen mit einem Aktivkohlefilter kommunizierenden Filteranschluss (34) aufweist.

9. Einrichtung nach Anspruch 8, **dadurch gekennzeichnet, dass** jedes der beiden Tankdruckregelventile (3, 4) zwei durch eine Membran (21) getrennte Kammern (22, 23; 24, 25) aufweist, von denen eine (22; 24) mit dem Tankanschluss (33) und die andere (23; 25) mit dem Filteranschluss (34) kommuniziert.

10. Einrichtung nach Anspruch 8 oder 9, **dadurch gekennzeichnet, dass** die beiden Tankdruckregelventile (3, 4) dieselbe Ausrichtung besitzen und nebeneinander entlang eines gemeinsamen Anschlussteils (31) angeordnet sind, das an seinen entgegengesetzten Enden jeweils mit einem der Anschlüssen (33, 34) versehen ist.

11. Einrichtung nach Anspruch 8 oder 9, **dadurch gekennzeichnet, dass** die beiden Tankdruckregelventile (3, 4) entgegengesetzte Ausrichtungen besitzen und an demselben Ende eines gemeinsamen Anschlussteils (32) angeordnet sind, das am anderen Ende mit den Anschlüssen (33, 34) versehen ist.
